# FASCICULE DE BREVET EUROPEEN

(11) **EP 0 465 309 B1**
(45) Date de publication et mention de la délivrance du brevet: **15.11.1995**
(21) Numéro de dépôt: 91401746.2
(22) Date de dépôt: 27.06.1991
(51) Int. Cl.: C03C 17/25, C03C 17/34

(54) **Procédé de formation d'une couche d'oxydes d'aluminium et de titane sur du verre, vitrage comprenant le verre obtenu et une couche semi-conductrice**
Verfahren zur Bildung einer Schicht aus Aluminium- Titanoxiden auf Glas, das so erhaltene Glas mit halbleitenden Beschichtungen
Process for forming a layer of oxydes of aluminium and titanium on glass, obtained glass with a semiconducting layer

(30) Priorité: 05.07.1990 FR 9008531; 05.07.1990 FR 9008530
(43) Date de publication de la demande: 08.01.1992
(60) Demande divisionnaire: 95106706.5
(73) Titulaire: SAINT-GOBAIN VITRAGE, 92400 Courbevoie (FR)
(72) Inventeur: Zagdoun, Georges, F-92250 La Garenne Colombes (FR); Cordier, Bruno, F-77100 Nanteuil les Meaux (FR)
(74) Mandataire: Le Vaguerese, Sylvain Jacques

(56) Documents cités:
- EP-A- 0 192 892
- WO-A-85/05292
- CH-A- 640 205
- FR-A- 2 189 474
- FR-A- 2 192 982
- FR-A- 2 310 977
- GB-A- 2 139 997
- GB-A- 2 163 140
- US-A- 2 833 902
- US-A- 4 160 061

## Description

La présente invention concerne un procédé pour former sur un support de verre, une couche d'oxydes d'aluminium et de titane ; elle concerne aussi un verre portant cette couche ainsi que son utilisation, en particulier, dans des vitrages comprenant une mince couche transparente semi-conductrice d'oxyde métallique, utilisables dans le bâtiment ou dans l'automobile.

Des vitrages destinés aux bâtiments sont avantageusement constitués en verre silico-sodo-calcique clair qui présente des facteurs de transmission lumineuse et énergétique élevés, par exemple proches de 90 % pour une épaisseur de 4 mm. Pour améliorer le confort des utilisateurs, notamment en hiver, en réduisant la perte énergétique due à une fuite de calories de l'intérieur du bâtiment vers l'extérieur, il est connu de constituer un vitrage en recouvrant une face d'une feuille de verre d'une couche semi-conductrice d'oxyde métallique, dite de basse émissivité, qui accroît le taux de réflexion du vitrage dans l'infra-rouge. Un tel vitrage en verre revêtu d'une telle couche peut être associé à une autre feuille de verre non revêtue, emprisonnant entre elles un espace d'air, pour constituer un vitrage double isolant.

Des vitrages portant des revêtements transparents et présentant des propriétés de basse émissivité sont connus. Ils peuvent être constitués par exemple d'un support de verre et d'une mince couche d'oxyde métallique, telle qu'une couche d'oxyde d'étain dopé, par exemple au fluor, ou bien une couche d'oxyde d'indium dopé à l'étain (ITO).

Ces couches peuvent être obtenues par différents procédés, procédés sous vide (évaporation thermique, pulvérisation cathodique) ou par pyrolyse de composés métalliques sous forme de solution, de poudre ou de vapeur, projetés sur le substrat chauffé. Dans ce cas, les composés, au contact du verre chauffé à température élevée, se décomposent et s'oxydent pour former une couche d'oxyde métallique.

Les couches, telles qu'une couche d'oxyde d'étain dopé au fluor ou une couche d'ITO, présentent des propriétés satisfaisantes pour être utilisées, notamment dans des vitrages bas émissifs.

Les propriétés optiques et électriques de ces couches les rendent aussi utilisables pour former des vitrages d'automobile, par exemple des vitrages chauffants, notamment des pare-brise, et comme substrats dans des produits particuliers, des dispositifs opto-électroniques tels que des cellules photovoltaïques et des dispositifs d'affichage à cristaux liquides.

Cependant, aux épaisseurs nécessaires à l'obtention de propriétés électroniques intéressantes, les couches sont colorées en réflexion. Ainsi, les couches d'oxyde d'étain dopé au fluor et les couches d'ITO, d'une épaisseur de 180 nm, sont bleues en réflexion et celles ayant une épaisseur de 360 nm sont vertes.

Cette couleur peut ne pas plaire ou ne pas être adaptée à l'utilisation envisagée. En outre, de légères variations d'épaisseur des couches entraînent des irrégularités de couleur (iridescence).

Pour éliminer ou réduire cette coloration en réflexion ou ces irisations, il a été proposé de déposer sur le substrat en verre, avant de former la couche semi-conductrice, une couche dite intermédiaire ou sous-couche, dont l'épais-seur géométrique et l'indice de réfraction sont tels que l'association des couches intermédiaire et semi-conductrice forme une structure de couleur neutre en réflexion.

Des couches connues présentant un indice de réfraction approprié pour former une telle structure sont par exemple formées d'oxyde métallique ou de nitrure métallique ou de leurs mélanges ; ce sont par exemple des couches d'oxyde d'aluminium, des couches d'oxycarbure de silicium ou d'oxy-nitrure de silicium, des couches d'oxyde d'aluminium asso-cié à d'autres oxydes comme SnO₂, ZnO, In₂O₃, TiO₂, etc...

Ces couches intermédiaires d'indice de réfraction et d'épaisseur géométrique spécifiques permettent d'éliminer ou de réduire d'une manière importante la couleur observée en réflexion de la couche semi-conductrice. En ce qui concerne les irisations, dues aux variations d'épaisseurs dans la couche semi-conductrice, bien qu'elles soient réduites notablement par la présence de cette couche intermédiaire, on peut cependant encore observer des irisations sous forme de bandes approximativement parallèles, qui ressemblent à des ondulations colorées, dont le pas est, certes, plus grand que lorsque le produit ne comprend pas de couche intermédiaire entre le substrat en verre et la couche semi-conductrice, mais qui sont cependant non appropriées pour un produit de bonne qualité.

Il est connu du brevet CH-640 205 une structure vitrée comprenant un support muni d'un premier revêtement d'une matière réfléchissant les infrarouges où la visibilité des irisations résultant de ce premier revêtement est réduite par un second revêtement superposé au premier, notamment en oxyde ou nitrure métallique.

Il est également connu du brevet WO-85/05292 un procédé de dépôt de couches anti-iridescentes sur verre comprenant la projection d'une solution anhydre d'un chélate alkoxyde d'aluminium et d'un autre réactif sous forme de chélate et apte à modifier l'indice de réfraction de la couche déposée.

La présente invention a donc pour objet la formation, sur un substrat en verre, d'un film mince transparent présentant une bonne adhérence au verre, en particulier un film d'Al₂O₃-TiO₂, pouvant servir de couche intermédiaire entre le substrat en verre et une couche transparente d'oxyde métallique, notamment semi-conductrice, pour former un produit qui n'a pas les inconvénients précités, et notamment qui présente une couleur neutre en réflexion et pas d'irisations ou ondulations.

L'invention a aussi pour objet des produits comprenant un substrat en verre et une mince couche transparente d'oxydes d'aluminium et de titane, et en outre une couche transparente semi-conductrice, ces produits présentant des caractéristiques de transparence et de conductivité électrique appropriées pour former des vitrages chauffants, vitrages bas émissifs, substrats pour des dispositifs opto-électroniques tels que des cellules photo-voltaïques et des dispositifs d'affichage à cristaux liquides.

Le procédé selon l'invention pour former une couche d'oxydes d'aluminium et d'étain, ou de titane, sur un support en verre chauffé à une température inférieure à sa température de ramollissement, consiste à projeter, sur le support, des composés organiques de l'aluminium et de l'étain, ou du titane, qui se décomposent thermiquement au contact du verre chaud et s'oxydent pour former ladite couche d'oxydes. Ce procédé se caractérise en ce qu'on projette, sur ce support chaud, une solution d'un chélate d'aluminium non hydrolysable et d'au moins un chélate de titane et d'un alcoolate de titane.

Avantageusement, le chélate d'aluminium non hydrolysable est l'acétylacétonate d'aluminium ou l'isovalérylacétonate d'aluminium. Le chélate d'aluminium choisi pour la réalisation de l'invention doit être non hydrolysable : en effet, un chélate hydrolysable se transforme en hydrate d'alumine qui précipite et n'est plus pyrolysable.

Pour former la solution de chélate d'aluminium, on utilise tout solvant de ce composé et, de préférence, un solvant commun aux trois composés organométalliques utilisés dans l'invention, notamment l'acétate d'éthyle.

D'une manière générale, la concentration en chélate d'aluminium dans la solution doit permettre d'avoir une viscosité appropriée pour être utilisée dans les dispositifs de pulvérisation employés habituellement pour la mise en oeuvre du procédé de pyrolyse.

Le chélate d'aluminium est dissous dans le solvant de préférence pour obtenir une concentration de 1 à 3 g d'alu-minium métallique pour 100 ml de solution.

La solution des composés organométalliques utile selon l'invention pour former une couche d'Al₂O₃-TiO₂ comprend le chélate d'aluminium, un chélate de titane et un alcoolate de titane. Le chélate de titane est avantageusement l'acétylacétonate et isopropylate de titane (AA₂TiiPr₂). L'alcoolate de titane est, de préférence, le titanetétraoctylèneglycol ou la titanetriéthanolamine.

Le procédé utilisé pour former les couches d'Al₂O₃ - TiO₂ selon l'invention est un procédé de pyrolyse en phase liquide. Des procédés de pyrolyse liquide et des dispositifs pour leur mise en oeuvre sont décrits par exemple dans les brevets français 2 176 760, 2 211 411 et les brevets européens 12 679, 25 738, 60 747 et 51 538.

D'une manière générale, le procédé consiste à faire passer un ruban de verre, formé par exemple dans un four "float" et maintenu à température élevée, dans un poste de pulvérisation d'une solution de composés métalliques thermiquement décomposables à la température du ruban de verre. Le gaz servant à l'atomisation du liquide est l'air ou l'azote. Ce poste comprend essentiellement un ou plusieurs pistolets pulvérisateurs de la solution, qui peuvent être animés d'un mouvement transversal de va-et-vient au-dessus du ruban de verre.

Le ruban de verre est à une température inférieure à la température de ramollissement du verre, température qui dépend de la composition du verre. Elle est généralement comprise entre 500°C et 750°C et, en particulier, pour la réalisation de l'invention, entre 600°C et 650°C.

Le contrôle du débit de liquide envoyé dans les pistolets pulvérisateurs, de la vitesse de défilement du verre et de celle de déplacement transversal des pistolets lorsque ceux-ci sont mobiles, permet d'adapter l'épaisseur du dépôt en fonction de l'utilisation ultérieure envisagée.

Ainsi, on peut obtenir des couches d'Al₂O₃-TiO₂ ayant une épaisseur de 40 nm à 150 nm qui sont utiles notamment dans des vitrages anti-reflets, bas émissifs et chauffants.

En contrôlant la quantité des composés d'aluminium et de titane dans la solution de pulvérisation, on peut adapter l'indice de réfraction de la couche finale en fonction de l'utilisation souhaitée.

Selon l'invention, on peut obtenir des couches ayant une épaisseur comprise entre 40 nm et 150 nm avec une variation d'épaisseur Δ e/e inférieure ou égale à 5 %.

Les quantités respectives des composés du titane dans le mélange sont telles que le rapport des concentrations en chélate et alcoolate de titane, exprimées en poids de titane, est d'environ 2:1. Pour des valeurs différentes, on a observé une moins bonne résistance chimique et une non-homogénéité de la couche.

Comme solvants des composés du titane, on peut utiliser tout solvant de ces composés et notamment l'acétate d'éthyle qui est aussi un solvant du chélate d'aluminium.

Comme pour la solution du chélate d'aluminium, la solution des composés du titane doit avoir une viscosité la rendant utilisable dans les dispositifs de pulvérisation employés avec les procédés de pyrolyse usuels.

Par le choix approprié des concentrations en composés de l'aluminium et de titane, on peut adapter l'indice de réfraction de la couche d'Al₂O₃-TiO₂ en fonction de l'utilisation envisagée (couches réfléchissantes, anti-couleur, etc...). Par exemple avec des concentrations, exprimées en poids de métal, adaptées pour avoir un rapport Al/Ti inférieur à 2, on peut obtenir des couches ayant un indice de réfraction compris entre 1,73 et 1,80.

D'autre part, l'utilisation d'une grande quantité de solvant a pour effet de refroidir le ruban de verre de sorte que les composés organométalliques peuvent ne pas être décomposés de façon satisfaisante par la chaleur, ce qui conduit à des couches de propriétés médiocres.

Les couches minces d'Al₂O₃-TiO₂ selon l'invention peuvent être obtenues dans les conditions de fabrication industrielle du substrat de verre. Ceci constitue un avantage important. En effet, les verres qui portent un revêtement transparent semi-conducteur d'oxyde métallique, utiles pour former des vitrages tels que ceux mentionnés précédemment sont avantageusement fabriqués industriellement sur la ligne de production du verre lui-même.

Dans le cas du verre "float", le ruban de verre se déplace à des vitesses de défilement pouvant varier entre 3 et 25 m/mn. Des procédés de formation de ces couches et des dispositifs pour la mise en oeuvre de ces procédés ont été mis au point pour permettre d'obtenir les couches semi-conductrices d'oxydes métalliques souhaitées sur du verre se déplaçant à de telles vitesses. Les sous-couches d'épaisseur et d'indice de réfraction spécifiques, prévues pour former, avec la couche semi-conductrice, une structure de couleur neutre en réflexion et sans irisations, doivent donc pouvoir être aussi formées sur la ligne de production du verre, c'est-à-dire en tenant compte de la vitesse de défilement du ruban de verre, de sa température et des dispositifs utilisés habituellement pour la formation des couches semi-conductrices d'oxydes métalliques.

Le substrat peut être formé d'un verre silico-sodocalcique utilisé classiquement pour les vitrages automobiles et pour les bâtiments. Il peut s'agir d'un verre clair, c'est-à-dire non coloré, présentant une transmission lumineuse importante, par exemple supérieure à 90 % sous une épaisseur de 4 mm. Il peut s'agir aussi, d'un verre coloré dans sa masse apte à procurer un confort d'été accru pour les passagers du véhicule ou du local équipé de tels verres, du fait de sa transmission énergétique réduite. D'une manière générale, pour des vitrages pour automobiles par exemple, on choisit le verre, constituant le substrat, pour respecter les réglementations, c'est-à-dire un ensemble verre et couche ayant une transmission lumineuse (TL) d'au moins 75 % ou 70 % suivant les législations.

Comme verre coloré, on peut utiliser du verre dit "TSA" contenant Fe₂O₃ dans des proportions pondérales de l'ordre de 0,55 à 0,62 %, FeO pour environ 0,11 à 0,16 %, ce qui conduit à un rapport Fe²⁺/Fe de l'ordre de 0,19 à 0,25, CoO pour moins de 12 ppm et même de préférence pour moins de 10 ppm.

Il en résulte des propriétés, par exemple, pour une épaisseur de 3,85 mm, de transmission lumineuse (T_{L}) élevée voisine de 78 %, (illuminant D₆₅), un facteur énergétique de transmission (T_{E}) relativement bas et voisin de 60, ce qui conduit à un rapport T_{L}/T_{E} de l'ordre de 1,30.

On peut aussi utiliser comme verre coloré, en particulier lorsque la réglementation n'impose qu'une transmission lumineuse de 70 %, un verre un peu plus coloré que le "TSA", mais présentant par contre une transmission lumineuse un peu plus faible, à savoir un verre 〈〈 TSA²⁺ 〉〉.

Ce verre 〈〈 TSA²⁺ 〉〉 est coloré par les mêmes oxydes que précédemment mais dans des proportions légèrement différentes.

Ainsi, les proportions d'oxydes métalliques sont les suivantes :
· Fe₂O₃ : approximativement compris entre 0,75 et 0,90 %
· FeO : approximativement compris entre 0,15 et 0,22 % soit Fe²⁺/Fe = 0,20 environ
· CoO : inférieur à 17 ppm et même de préférence inférieur à 10 ppm

Il en résulte pour ce verre 〈〈 TSA²⁺ 〉〉, en 3,85 mm d'épaisseur les propriétés suivantes :
· T_{L} : de l'ordre de 72 %
· T_{E}: de l'ordre de 50 %

ce qui conduit à un rapport T_{L}/T_{E} de l'ordre de 1,40 ou 1,50.

Les couches d'Al₂O₃-TiO₂ obtenues selon l'invention sont particulièrement utiles dans des produits comprenant un substrat en verre et une mince couche transparente semi-conductrice d'oxyde métallique, pour former des vitrages transparents chauffants ou bas émissifs. Les couches d'Al₂O₃-TiO₂ sont, alors, des sous-couches, jouant le rôle d'une couche appelée couche anti-couleur, qui forme, avec la couche semi-conductrice, une structure de couleur neutre en réflexion et ne présentant pas d'irisations ou d'ondulations colorées.

Différentes couches semi-conductrices peuvent être déposées sur la couche selon l'invention. Ces couches peuvent être notamment des couches d'oxyde d'étain dopé au fluor (SnO₂:F) ou bien des couches d'oxyde d'indium dopé à l'étain (ITO), ou bien encore des couches d'oxyde de zinc dopé à l'indium ou à l'aluminium, comme indiqué précédemment.

Les couches de SnO₂:F et ITO peuvent être avantageusement obtenues par pyrolyse de poudres. Ainsi, on peut fabriquer les couches d'oxyde d'étain dopé au fluor à partir d'oxyde de dibutylétain (DBTO) en poudre et d'acide fluorhydrique anhydre gazeux, comme il est décrit dans le brevet français 2 380 997, à partir de difluorure de dibutylétain (DBTF) éventuellement, en mélange avec du DBTO comme décrit dans le document EP-A 178 956 ou EP-A-039 256. En ce qui concerne les couches d'ITO, on peut les obtenir par exemple à partir de formiate d'indium et d'un composé de l'étain comme le DBTO comme décrit dans le document EP-A-192 009.

On peut aussi obtenir les couches semi-conductrices de SnO₂:F par pyrolyse en phase gazeuse, notamment à partir d'un mélange de composés d'étain comme (CH₃)₂ SnCl₂, (C₄H₉)₂ SnCl₂, Sn (C₂H₅)₄ et de composés organofluorés tels que CCl₂F₂, CHClF₂ et CH₃CHF₂ comme décrit dans le brevet EP-A-027 403 ou bien encore à partir de monobutyltrichloroétain et un composé de formule x CHF₂ tel que le chlorodifluorométhane mentionné dans le brevet EP-A-121 459.

Les couches d'oxyde de zinc dopé à l'indium ou à l'aluminium peuvent être obtenues par pyrolyse en phase vapeur, à partir de diéthylzinc ou d'acétate de zinc et de triéthylindium, chlorure d'indium ou triéthylaluminium, chlorure d'aluminium, comme décrit dans la demande de brevet EP-A-385 769.

Les couches de SnO₂:F peuvent aussi être obtenues en phase liquide à partir d'acétylacétonate d'étain ou de diméthylétain-2-propionate dans des solvants organiques appropriés comme décrits notamment dans le brevet français 2 211 411.

On a trouvé qu'en mettant en oeuvre le procédé de l'invention, en utilisant les composés spécifiques mentionnés en concentrations telles que le rapport Al/Ti soit inférieur à 2, on pouvait obtenir des couches d'Al₂O₃-TiO₂ très homogènes d'indice de réfraction compris, entre 1,73 et 1,80...

Avec des couches d'Al₂O₃-TiO₂ d'une épaisseur comprise entre 80 nm et 100 nm, associées à une couche semi-conductrice d'oxyde métallique, telle que mentionnée précédemment et ayant une épaisseur interféren-tielle (100 à 800 nm), on peut obtenir une structure de couleur neutre en réflexion et ne présentant pas d'irisa-tions ou d'ondulations telles que décrites précédemment, et qui, par conséquent, peut être utile pour former des vitrages chauffants, notamment pour automobile ou des vitrages bas émissifs, notamment pour le bâtiment. En particulier, lorsque la couche semi-conductrice des vitrages bas émissifs est constituée par une couche de SnO₂:F, ces vitrages présentent une émissivité inférieure ou égale à 0,27, et particulièrement inférieure ou égale à 0,25, pour une épaisseur de la couche semi-conductrice supérieure ou égale à 300 nm.

La neutralité optique en réflexion de la structure formée par la sous-couche d'Al₂O₃-TiO₂ et la couche semi-conductrice dépend, comme il est connu, de l'indice de réfraction et de l'épaisseur géométrique de la sous-couche.

La neutralité optique en réflexion se définit par la longueur d'onde dominante (λ dom) en réflexion et par sa pureté.

La longueur d'onde dominante, mesurée par spectrophotométrie, est déterminée, en fonction d'un illuminant ; l'illuminant D₆₅ est habituellement utilisé pour le bâtiment et l'illuminant A pour l'automobile.

Dans l'invention, on a choisi la pureté la plus faible possible comme critère pour obtenir la meilleure neutralité optique en réflexion.

On a pu obtenir des vitrages selon l'invention, comprenant une couche d'Al₂O₃-TiO₂ et une couche semi-conductrice d'oxyde métallique présentant une pureté inférieure à 10 %, quel que soit l'illuminant choisi.

On pense que cette neutralité optique en réflexion est due à l'aspect homogène de la couche obtenue selon l'invention, à partir d'un mélange particulier de composés spécifiques et par pyrolyse en phase liquide.

Les exemples suivants non limitatifs illustrent l'invention.

### EXEMPLE 1

### a) - Formation d'une couche d'Al₂O₃-TiO₂

On prépare une solution A à 5 % en poids de titane dans de l'acétate d'éthyle, à partir de chélate de titane (acétylacétonate et isopropylate de titane) et d'alcoolate de titane (titane tétraoctylèneglycol) dans laquelle le rapport des concentrations en chélate et en alcoolate, exprimées en poids de titane, est de 2:1.

On prépare une solution B de chélate d'aluminium non hydrolysable (isovalérylacétonate d'aluminium) dans de l'acétate d'éthyle à raison de 2,55 g d'aluminium pour 100 ml de solution.

On mélange rapidement les deux solutions A et B, à raison de 33 ml de solution A et 67 ml de solution B. Les deux solutions sont totalement miscibles.

Dans la solution C finale, le rapport de concentrations exprimées en poids de métal Al/Ti est de 1,18.

Ce mélange est utilisé dans un dispositif de pulvérisation, tel que celui décrit dans le brevet français 2 176 760 pour former une couche d'Al₂O₃-TiO₂ sur un substrat de verre flotté, d'une épaisseur de 6 mm et d'une largeur de 3,4 m.

Le dispositif de pulvérisation est disposé à la sortie du four float. La température du substrat de verre est de 600°C et la vitesse de défilement du verre est de 6 m/mn.

On utilise l'air comme gaz d'atomisation à un débit de 34 m³/h. La solution C des composés métalliques est pulvérisée sur le ruban de verre à raison de 33 l/h à partir d'un pistolet de pulvérisation qui se déplace transversalement à la direction de défilement du substrat de verre, à une vitesse de 2,5 m/s.

L'indice de réfraction, mesuré par ellipsométrie, est de 1,76 ± 0,01.

Le coefficient d'absorption de la lumière solaire est de 1 % environ.

### b) - Dépôt d'une couche semi-conductrice :

Sur la couche d'Al₂O₃-TiO₂ obtenue précédemment, réchauffée à 650°C, on forme une couche de SnO₂ dopé au fluor par pyrolyse de difluorure dibutylétain (DBTF) en poudre pour obtenir une couche d'une épaisseur de 310 nm (± 10 nm). La couche de SnO₂:F présente une émissivité de 0,27 et un indice de réfraction de 2 environ.

On mesure les caractéristiques lumineuses de transmission T_{L} et réflexion R_{L} du produit portant les deux couches (sous-couche d'Al₂O₃-TiO₂et couche de SnO₂:F), pour l'illuminant D₆₅.

On détermine en outre, par spectrophotométrie, la longueur d'onde dominante, λ dom, en réflexion, en fonction de l'illuminant D₆₅ (habituellement utilisé pour les vitrages destinés aux bâtiments) et sa pureté. On note que cette longueur d'onde dominante est égale à 483 nm et présente une pureté de 8,2 %.

On a aussi déterminé la longueur d'onde dominante en fonction de l'illuminant A (utilisé habituellement pour les vitrages destinés à l'automobile). La λ dom est de 499 nm et sa pureté de 6 %.

On constate que la λ dom du produit obtenu dans cet exemple a une pureté inférieure à 10 %, que l'illuminant choisi soit l'illuminant D₆₅ ou l'illuminant A.

Le produit obtenu dans cet exemple a une couleur neutre en réflexion et on n'observe pas d'ondulations colorées ou d'irisations.

Dans les deux cas, les coefficients de transmission lumineuse T_{L} et de réflexion lumineuse R_{L} sont respectivement d'environ 79 % et 12 %.

Par suite de ses propriétés, le produit obtenu dans cet exemple, est avantageusement utilisable comme vitrage bas émissif pour le bâtiment.

Ayant en outre une faible résistivité de 7 x 10⁻⁴ Ω.cm, il est aussi utile comme vitrage chauffant, particulièrement pour l'automobile.

### EXEMPLE 2

A titre de témoin, on a fabriqué un produit formé d'un même substrat de verre et d'une couche d'oxyde d'étain dopé au fluor (SnO₂:F) obtenue par le même procédé que celui utilisé dans l'exemple précédent. L'épaisseur de la couche de SnO₂:F est de 310 nm ± 10 nm. Le produit ne comprend pas de sous-couche d'Al₂O₃-TiO₂ La longueur d'onde dominante, déterminée en fonction de l'illuminant D₆₅ est de 489 nm et sa pureté de 20 %. Les caractéristiques lumineuses T_{L}, R_{L} du produit sont respectivement de 77 % et 11 % environ.

### EXEMPLE 3

On opère comme dans l'exemple 1a, mais pour obtenir la solution finale C, on mélange 28 ml de solution A et 72 ml de solution B pour avoir un rapport des concentrations exprimées en poids de métal Al/Ti de 1,47.

La couche C obtenue a une épaisseur de 85 nm avec une variation d'épaisseur Δ e/e de 5 % et un indice de réfraction de 1,75 ± 0,01. Le coefficient d'absorption est de 1 % environ.

Une couche de SnO₂:F est formée sur la couche d'Al₂O₃-TiO₂ comme indiqué à l'exemple 1b. Son épaisseur est de 310 nm ± 10 nm.

On mesure les caractéristiques lumineuses du produit formé par le substrat de verre, la couche d'Al₂O₃-TiO₂ et la couche semi-conductrice de SnO₂:F et on détermine les longueurs d'onde dominantes (λ dom) en réflexion, en fonction de l'illuminant D₆₅ et de l'illuminant A.

On constate que la longueur d'onde dominante en réflexion, déterminée en fonction de l'illuminant D₆₅ est de 480 nm et sa pureté de 9 %. La λ dom, déterminée en fonction de l'illuminant A est de 496 nm et sa pureté de 6 %.

Le produit obtenu dans cet exemple a une couleur neutre en réflexion et ne présente pas d'irisations ou d'ondulations colorées.

Les coefficients de transmission lumineuse T_{L} et de réflexion lumineuse R_{L}, dans les 2 cas, sont respectivement de 79 % et 12 % environ.

La couche de SnO₂:F a une émissivité de 0,24 et une résistivité de 6 x 10⁻⁴ Ω.cm.

### EXEMPLE 4

On prépare une solution, dans de l'acétate d'éthyle, d'acétylacétonate et isopropylate de titane, de titane tétraoctylèneglycol et d'isovalérylacétonate d'aluminium comme à l'exemple 1, mais le rapport des concentrations exprimées en poids de métal (Al/Ti) est de 1,77.

Avec cette solution, on forme, comme indiqué à l'exemple 1, une couche d'Al₂O₃-TiO₂ dont l'épaisseur est de 90 nm, avec une variation d'épaisseur de Δ e/e de 5 % et dont l'indice de réfraction est de 1,74 ± 0,01. L'absorption lumineuse de la couche est de 1 %.

Sur cette couche, est formée, par pyrolyse, comme à l'exemple 1b, une couche semi-conductrice d'oxyde d'étain dopé au fluor (SnO₂:F) ayant une épaisseur de 310 nm ± 10nm et une émissivité de 0,25.

La longueur d'onde dominante en réflexion, pour l'ensemble des 2 couches, déterminée en fonction de l'illuminant D₆₅, est de 482 nm et sa pureté est de 9 %.

### EXEMPLE 5

On prépare, comme à l'exemple 4, un produit dans lequel la sous-couche d'Al₂O₃-TiO₂ est obtenue par pyrolyse liquide comme à l'exemple 1, mais à partir d'une solution dans laquelle le rapport Al/Ti (concentrations en poids de métal) est de 2,06. La couche d'Al₂O₃-TiO₂ a une épaisseur de 95 nm et un indice de réfraction de 1,70 ± 0,01.

La couche d'oxyde d'étain dopé au fluor a une épaisseur de 310 ± 10 nm.

La longueur d'onde dominante en réflexion par l'ensemble des 2 couches Al₂O₃-TiO₂ et SnO₂:F, déterminée en fonction de l'illuminant D₆₅, est de 384 nm et sa pureté est de 14 %.

### EXEMPLE 6

On forme, sur un substrat en verre, une sous-couche d'Al₂O₃-TiO₂ à partir d'une solution dans laquelle le rapport Al/Ti (concentrations en poids de métal) est de 2,36. La couche d'Al₂O₃-TiO₂ a une épaisseur de 90 nm et un indice de réfraction de 1,69 ± 0,01.

Sur cette couche d'Al₂O₃-TiO₂, on forme une couche de SnO₂:F d'une épaisseur de 310 nm ± 10 nm.

La longueur d'onde dominante en réflexion pour l'ensemble des deux couches Al₂O₃-TiO₂ et SnO₂:F, déterminée en fonction de l'illuminant D₆₅, est de 462 nm et sa pureté est de 18 %.

D'après les exemples 5 et 6, on peut constater que, en augmentant le rapport Al/Ti de la sous-couche pour atteindre des valeurs supérieures à 2 environ, on obtient des ensembles sous-couche/couche semi-conductrice qui ne sont pas neutres en réflexion et ne sont pas utilisables notamment pour former des vitrages bas émissifs de qualité souhaitée.

On doit noter que le réchauffage à 650°C des couches d'Al₂O₃-TiO₂ pour la formation de la surcouche semi-conductrice par pyrolyse ne modifie pas l'indice de réfraction de la couche.

La résistance chimique des verres portant une sous-couche d'Al₂O₃-TiO₂ selon l'invention et une couche semi-conductrice de SnO₂:F a été déterminée en immergeant des échantillons de ces verres dans une solution normale d'acide chlorhydrique à 100°C et, aussi, dans une solution d'acide fluorhydrique à 20°C, formée par 7 ml d'une solution à 40 % de HF dilués dans un litre d'eau.

Dans tous les cas, on a constaté un début d'attaque par ces acides après plus de 30 mn, ce qui permet de dire que ces verres ont une résistance chimique excellente.

Dans les exemples précédents, la couche semi-conductrice est formée d'oxyde d'étain dopé au fluor. Des vitrages présentant des propriétés analogues peuvent être obtenus, en utilisant une autre couche semi-conductrice, par exemple une couche d'oxyde d'indium dopé à l'étain (ITO). Une telle couche présente en outre l'avantage d'avoir une émissivité de 0,11 environ pour une épaisseur de 180 nm.

Les produits selon l'invention qui comprennent une couche d'Al₂O₃-TiO₂ et une couche semi-conductrice, comme décrit précédemment, et qui ne présentent pas de coloration gênante du point de vue esthétique, peuvent être aussi utiles comme vitrages d'automobile, par exemple des vitrages chauffants, notamment pour former des parebrise.

Dans ce cas, ces produits peuvent être associés à une feuille de polymère plastique tel que du polyuréthane disposée au contact de la couche semi-conductrice pour constituer un vitrage feuilleté à un seul support de verre. Les produits selon l'invention peuvent être aussi associés à une autre plaque de verre par l'intermédiaire d'une feuille de polymère plastique tel que du polybutyralvinylique, du polyuréthane ou du polychlorure de vinyle, pour former un vitrage feuilleté à deux plaques de verre.

Pour l'alimentation en courant électrique de la couche semi-conductrice, ces vitrages comprennent des amenées de courant, telles que clinquants en cuivre et/ou bandes sérigraphiées à l'argent, disposées le long des bords supérieur et inférieur des vitrages. L'émail noir généralement déposé sur ces vitrages pour cacher, notamment, les amenées de courant, n'est pas dénaturé par la présence de la couche d'Al₂O₃-TiO₂.

D'autre part, la couche d'Al₂O₃-TiO₂ présente une bonne adhérence sur le verre, ce qui favorise la bonne cohésion de ces ensembles verre, couche semi-conductrice et feuille de polymère.

Les produits selon l'invention, comprenant une couche d'Al₂O₃-TiO₂ et une couche semi-conductrice, par exemple de SnO₂:F ou d'ITO, peuvent subir l'étape de bombage sans inconvénients car ces couches, déposées par pyrolyse, sont résistantes mécaniquement.

Les couches d'Al₂O3-TiO₂, obtenues selon l'invention, qui sont transparentes et sont très uniformes du point de vue de l'épaisseur, sont aussi utiles dans des vitrages anti-reflets.

On a obtenu un tel vitrage en formant sur un substrat de verre d'indice de réfraction égale à 1,52, une couche d'Al₂O₃-TiO₂ à partir d'une solution contenant les trois composés selon l'invention et dont le rapport Al/Ti était de 1,55 conduisant à une couche d'indice de réfraction de 1,74 ± 0,01 et d'épaisseur de 60 - 70 nm ; l'épaisseur optique de la couche selon l'invention est égale à λ/4. Sur cette couche, on a formé, comme il est connu, une couche de TiO₂ par pyrolyse liquide, pour que son épaisseur optique soit égale à λ/2, puis une couche de SiO₂, par exemple par CVD plasma, dont l'épaisseur optique était de λ/4.

Le coefficient de réflexion lumineuse du vitrage était inférieur à 1 % par face traitée. La présence de la sous-couche d'Al₂O₃-TiO₂, par suite de l'uniformité de son épaisseur, permet d'obtenir un coefficient de réflexion plus homogène sur tout le produit.

Les couches d'Al₂O₃-TiO₂ obtenues selon l'invention constituent, en outre, des couches barrière à la diffusion des ions alcalins. Les verres portant ces couches peuvent dont être utiles comme substrats dans des dispositifs opto-électroniques tels que des dispositifs d'affichage à cristaux liquides, dans lesquels la diffusion des ions alcalins, particulièrement le sodium, doit être évitée.

## Revendications

1. Procédé de formation d'une couche d'oxydes d'aluminium et de titane sur un support en verre chauffé à une température inférieure à la température de ramollissement du verre, à partir de composés organiques de l'aluminium et de titane se décomposant thermiquement au contact du verre chaud et s'oxydant pour former ladite couche en vue de fabriquer des vitrages, **caractérisé en ce qu'**on projette sur le support en verre chaud, une solution d'un chélate d'aluminium non hydrolysable et d'au moins un chélate de titane et d'un alcoolate de titane, avec un rapport des concentrations en composés d'aluminium et de titane, exprimé en poids de métal (Al/Ti) inférieur à 2.

2. Procédé conforme à la revendication 1, **caractérisé en ce que** le chélate d'aluminium est l'acétylacétonate d'aluminium ou l'isovalérylacétonate d'aluminium.

3. Procédé conforme à l'une des revendications 1 ou 2, **caractérisé en ce que** le chélate de titane est l'acétylacétonate et isopropylate de titane et l'alcoolate de titane est le titanetétraoctylèneglycol ou le titanetriéthanolamine.

4. Procédé conforme à l'une des revendications 1 à 3, **caractérisé en ce que** le rapport des concentrations en chélate et alcoolate de titane, exprimées en poids de titane, est de 2:1 environ.

5. Procédé conforme à l'une quelconque des revendications précédentes, **caractérisé en ce que** la température du verre est de 600 à 650°C.

6. Procédé conforme à l'une quelconque des revendications précédentes, **caractérisé en ce que** le support de verre se défile à une vitesse de 3 à 25 m/s.

7. Vitrage obtenu par le procédé conforme à l'une des revendications précédentes, comprenant un support de verre et une couche d'oxydes d'aluminium et titane d'indice de réfraction compris entre 1,73 et 1,80, sur laquelle est déposée une couche transparente semi-conductrice d'oxyde métallique.

8. Vitrage conforme à la revendication 7, **caractérisé en ce que** la couche d'oxydes d'aluminium et de titane a une épaisseur comprise entre 40 nm et 150 nm avec une variation d'épaisseur Δ e/e inférieure ou égale à 5 % et un coefficient d'absorption inférieur ou égal à 3 %.

9. Vitrage conforme à l'une des revendications 7 ou 8, **caractérisé en ce que** la couche semi-conductrice est une couche d'oxyde d'étain dopé au fluor présentant notamment une émissivité inférieure ou égale à 0,27 pour une épaisseur supérieure ou égale à 300 nm, ou une couche d'oxyde d'indium dopé à l'étain ou une couche d'oxyde de zinc dopé à l'indium ou à l'aluminium.

10. Vitrage conforme à l'une des revendications 7 à 9, **caractérisé en ce que** la couche d'oxydes d'aluminium et de titane a une épaisseur comprise entre 80 et 100 nm et la couche transparente semi-conductrice d'oxyde métallique a une épaisseur comprise entre 100 nm et 800 nm, l'ensemble des deux couches constituant une structure neutre en réflexion avec une pureté en réflexion, inférieure ou égale à 10 %.

11. Vitrage chauffant selon l'une des revendications 7 à 10 dans lequel la couche semi-conductrice d'oxyde métallique présente une résistivité d'environ 6 x 10⁻⁴ Ω.cm.

12. Vitrage feuilleté chauffant conforme à la revendication 11, qui comprend, au contact de la couche semi-conductrice, une feuille intercalaire de polymère plastique du type PVB, PVC ou PU, associée à une plaque de verre, et des amenées de courant disposées le long des bords supérieur et inférieur du vitrage.

13. Vitrage selon l'une des revendications 7 à 10 servant de substrat pour dispositifs opto-électroniques.

## Claims

1. Process for forming a film of aluminium and titanium oxides on a glass support heated to a temperature below the softening temperature of the glass, from organic compounds of aluminium and titanium that decompose thermally in contact with the hot glass and oxidize to form said film, for the purpose of manufacturing panes, characterized in that a solution of a non-hydrolizable aluminium chelate and of at least one titanium chelate and one titanium alcoholate, having a ratio of the concentrations of aluminium and titanium compounds, expressed in weight of metal (Al/Ti) less than 2, is projected onto the hot glass support.

2. Process according to Claim 1, characterized in that the aluminium chelate is aluminium acetylacetonate or aluminium isovalerylacetonate.

3. Process according to one of Claims 1 or 2, characterized in that the titanium chelate is titanium acetylacetonate and isopropylate and the titanium alcoholate is titanium tetraoctylene glycol or titanium triethanolamine.

4. Process according to one of Claims 1 to 3, characterized in that the ratio of the concentrations of titanium chelate and alcoholate, expressed in weight of titanium, is approximately 2:1.

5. Process according to any one of the preceding Claims, characterized in that the temperature of the glass is from 600 to 650°C.

6. Process according to any one of the preceding Claims, characterized in that the glass support travels past at a speed of 3 to 25 m/s.

7. Pane obtained by the process according to one of the preceding Claims, comprising a glass support and a film of aluminium and titanium oxides having a refractive index from 1.73 to 1.80, upon which is deposited a semiconducting transparent film of metallic oxide.

8. Pane according to Claim 7, characterized in that the film of aluminium and titanium oxides has a thickness of from 40 nm to 150 nm with a variation in thickness Δ e/e less than or equal to 5% and a coefficient of absorption less than or equal to 3%.

9. Pane according to one of Claims 7 or 8, characterized in that the semiconducting film is a film of tin oxide doped with fluorine having, notably, an emissivity less than or equal to 0.27 for a thickness greater than or equal to 300 nm, or a film of indium oxide doped with tin or a film of zinc oxide doped with indium or with aluminium.

10. Pane according to one of Claims 7 to 9, characterized in that the film of aluminium and titanium oxides has a thickness of from 80 to 100 nm and the transparent semiconducting metallic oxide film has a thickness of from 100 nm to 800 nm, the assembly of the two films constituting a structure neutral in reflection with a purity in reflection less than or equal to 10%.

11. Heating pane according to one of Claims 7 to 10, in which the semi-conducting metallic oxide film has a resistivity of approximately 6 x 10⁻⁴ Ω.cm.

12. Heating laminated pane according to Claim 11, which comprises, in contact with the semiconducting film, an intermediate sheet of plastics polymer of the PVB, PVC or PU type, associated with a glass plate, and current leads disposed along the upper and lower edges of the pane.

13. Pane according to one of Claims 7 to 10, serving as a substrate for opto-electronic devices.

## Patentansprüche

1. Verfahren zur Herstellung einer Aluminiumoxid-Titanoxid-Schicht auf einem Glasträger, der auf eine Temperatur unterhalb der Erweichungstemperatur des Glases erhitzt ist, ausgehend von aluminium- und titanorganischen Verbindungen, die sich im Kontakt mit dem heißen Glas thermisch zersetzen und oxidieren, wobei die Schicht gebildet wird, um Verglasungen herzustellen, **dadurch gekennzeichnet, daß** auf den heißen Glasträger eine Lösung aus einem nicht hydrolysierbaren Aluminiumchelat und wenigstens einem Titanchelat und einem Titanalkoholat mit einem Konzentrationsverhältnis der Aluminiumverbindung zu den Titanverbindungen (Al/Ti), ausgedrückt als Metallgewicht, von unter 2 aufgespritzt wird.

2. Verfahren nach Anspruch 1, **dadurch gekennzeichnet, daß** das Aluminiumchelat Aluminiumacetylacetonat oder Aluminiumisovalerylacetonat ist.

3. Verfahren nach Anspruch 1 oder 2, **dadurch gekennzeichnet, daß** das Titanchelat Titanacetylacetonat und -isopropylat und das Titanalkoholat Titantetraoctylenglykol oder Titantriethanolamin ist.

4. Verfahren nach einem der Ansprüche 1 bis 3, **dadurch gekennzeichnet, daß** das Konzetrationsverhältnis von Titanchelat zu Titanalkoholat, ausgedrückt als Titangewicht, etwa 2 : 1 beträgt.

5. Verfahren nach einem der vorhergehenden Ansprüche, **dadurch gekennzeichnet, daß** die Glastemperatur 600 bis 650 °C beträgt.

6. Verfahren nach einem der vorhergehenden Ansprüche, **dadurch gekennzeichnet, daß** der Glasträger mit einer Geschwindigkeit von 3 bis 25 m/s durchläuft.

7. Verglasung, hergestellt durch das Verfahren nach einem der vorhergehenden Ansprüche, die einen Glasträger und eine Aluminiumoxid-Titanoxid-Schicht mit einem Brechungsindex von 1,73 bis 1,80 umfaßt, auf welcher eine durchsichtige halbleitende Metalloxidschicht aufgebracht ist.

8. Verglasung nach Anspruch 7, **dadurch gekennzeichnet, daß** die Aluminiumoxid-Titanoxid-Schicht eine Dicke von 40 bis 150 nm mit einer Schichtdickenschwankung e/e von höchstens 5 % und einen Absorptionskoeffizienten von höchstens 3 % besitzt.

9. Verglasung nach Anspruch 7 oder 8, **dadurch gekennzeichnet, daß** die halbleitende Schicht eine mit Fluor dotierte Zinnoxidschicht, die insbesondere bei einer Schichtdicke von mindestens 300 nm einen Emissionskoeffizienten von höchstens 0,27 aufweist, oder eine mit Zinn dotierte Indiumoxidschicht oder eine mit Indium oder Aluminium dotierte Zinkoxidschicht ist.

10. Verglasung nach einem der Ansprüche 7 bis 9, **dadurch gekennzeichnet, daß** die Aluminiumoxid-Titanoxid-Schicht eine Dicke von 80 bis 100 nm und die durchsichtige halbleitende Metalloxidschicht eine Dicke von 100 bis 800 nm besitzt, wobei der Aufbau aus beiden Schichten eine unter einfallendem Licht neutrale Struktur mit einer Reinheit unter einfallendem Licht von höchstens 10 % bildet.

11. Beheizbare Verglasung nach einem der Ansprüche 7 bis 10, in welcher die halbleitende Metalloxidschicht einen spezifischen Widerstand von etwa 6 · 10⁻⁴ Ω·cm aufweist.

12. Beheizbare Verbundverglasung nach Anspruch 11, welche im Kontakt mit der halbleitenden Schicht eine Zwischenfolie aus Kunststoff vom Typ PVB, PVC oder PU, die mit einer Glasscheibe verbunden ist, und entlang des oberen und unteren Randes der Verglasung angeordnete Stromzufuhrleitungen umfaßt.

13. Verglasung nach einem der Ansprüche 7 bis 10, welche als Substrat für optoelekronische Vorrichtungen dient.
